# EUROPÄISCHE PATENTSCHRIFT

(11) **EP 4 067 586 B1**
(45) Veröffentlichungstag und Bekanntmachung des Hinweises auf die Patenterteilung: **25.02.2026**
(21) Anmeldenummer: 21166304.2
(22) Anmeldetag: 31.03.2021
(51) Int. Cl.: E03C 1/32, E03C 1/322, E03D 11/13, E03D 11/14, F16C 11/06, F16C 11/10, F16B 7/04, F16B 21/18, F16B 39/282

(54) **WANDHALTERUNG**
WALL SUPPORT
SUPPORT MURAL

(43) Veröffentlichungstag der Anmeldung: 05.10.2022
(73) Patentinhaber: Geberit International AG, 8645 Jona (CH)
(72) Erfinder: LECHNER, Manuel, 8722 Kaltbrunn (CH)
(74) Vertreter: Frischknecht, Harry Ralph

(56) Entgegenhaltungen:
- EP-A1- 3 428 353
- EP-A2- 1 096 075
- DE-A1- 102007 048 632
- FR-A- 1 495 117

## Beschreibung

### TECHNISCHES GEBIET

Die vorliegende Erfindung betrifft eine Wandhalterung nach dem Oberbegriff von Anspruch 1.

### STAND DER TECHNIK

Aus der EP 3 428 353 ist eine Wandhalterung für einen Sanitärartikel bekannt geworden. Die Wandhalterung umfasst ein Ankerelement zur Befestigung an einer Wand, eine Gewindestange und ein Gewindeelement, welches mit einem Montagerahmen verbindbar ist. Ein Gewindeelement ist in eine Eingriffsposition und eine Freigabeposition bringbar. In der Freigabeposition kann die Gewindestange axial frei bewegt werden und in der Eingriffsposition ist das Gewindeelement mit der Gewindestange im Eingriff, so dass die Gewindestange über eine Schraubbewegung einstellbar ist.

Die EP 1 096 075 offenbart eine weitere Wandhalterung, welche ein Gelenk aufweist, mit welchem die Schraube zu einem Lagerteil verschwenkbar ist. Obwohl mit der EP 1 096 075 sehr gute Montageergebnisse für die Eckemontage erzielt wurden, ist der Einsatzzweck der Wandhalterung limitiert. Insbesondere können Unebenheiten auf Seiten der Wand nicht ausgeglichen werden.

Die Dokumente DE 10 2007 048632 A1 und FR 1 495 117 A offenbaren Wandhalterungen mit einem Ankerelement, einem Befestigungselement und einem Kugelgelenk.

### DARSTELLUNG DER ERFINDUNG

Ausgehend von diesem Stand der Technik liegt der Erfindung eine Aufgabe zugrunde, eine Wandhalterung anzugeben, welche die Nachteile des Standes der Technik überwindet. Insbesondere ist es eine bevorzugte Aufgabe der vorliegenden Erfindung, eine Wandhalterung zur Befestigung an einem Tragwerk, wie einer Wand eines Gebäudes, anzugeben, welche einfacher an vom Tragwerk vorgegebene Gegebenheiten anpassbar ist.

Diese Aufgabe löst der Gegenstand von Anspruch 1. Demgemäss umfasst eine Wandhalterung ein Ankerelement mit einem Befestigungsabschnitt zur Befestigung des Ankerelements an einem Tragwerk und mit einem ankerelementseitigen Lagerabschnitt sowie ein sich entlang einer Mittelachse erstreckendes Befestigungselement mit einem befestigungselementseitigen Lagerabschnitt und mit einem Befestigungsabschnitt zur Befestigung eines Sanitärelements. Das Befestigungselement und das Ankerelement stehen über die jeweiligen Lagerabschnitte miteinander in Verbindung. Der befestigungselementseitige Lagerabschnitt und ankerelementseitigen Lagerabschnitt stehen dabei in mechanischem Eingriff miteinander. Das Ankerelement weist eine Rückfläche und eine Frontfläche auf. Mit der Rückfläche ist das Ankerelement auf dem Tragwerk auflegbar bzw. in Kontakt bringbar. Von der Frontfläche steht das Befestigungselement ab. Der ankerelementseitige Lagerabschnitt und der befestigungselementseitige Lagerabschnitt bilden ein Kugelgelenk mit einer Kugelpfanne und einem Kugelkopf. Die Kugelpfanne weist einen durch einen Durchbruch in einer Seitenwand der Kugelpfanne bereitgestellten Freischnitt auf, welcher derart angeordnet ist, dass ausgehend von der Ausgangslage, bei welcher die Mittelachse rechtwinklig zur Rückfläche steht, das Befestigungselement durch den Freischnitt um einen Schwenkwinkel (β) von maximal 50° verschwenkbar ist.

Durch die Anordnung des Kugelgelenks ergeht der Vorteil, dass das Befestigungselement flexibler zum Ankerelement bewegbar ist, wodurch ein Ausgleich von lokalen Unebenheiten auf dem Tragwerk ermöglicht wird. Beispielsweise kann die Ankerplatte flächig an das Tragwerk befestigt werden und die Ausrichtung des Befestigungselements zum Sanitärelement erfolgt dann über das Kugelgelenk. Ein Unterlegen von Schifthölzern oder dergleichen zwischen Tragwerk und Ankerelement kann somit entfallen. Insofern wird die Montage vereinfacht.

Das Kugelgelenk, das heisst die Kugelpfanne und der Kugelkopf, sind derart angeordnet, dass es bei fixiertem Ankerelement eine Zugkraft, die auf das Befestigungselement wirkt, nicht zu einer Trennung des Kugelgelenks kommt. Mit anderen Worten bildet das Kugelgelenk eine Art Anschlag für die genannte Zugkraft.

Die Kugelpfanne und der Kugelkopf stehen in flächigen Kontakt miteinander. Die Kontaktfläche auf Seiten der Kugelpfanne weist die Form eines Kugelsegments auf und auch die Kontaktfläche auf Seiten des Kugelkopfs weist die Form eines Kugelsegments auf. Unter einem Kugelsegment wird ein Teilbereich einer Kugel verstanden. Die beiden Kontaktflächen in der kugeligen Form weisen dabei den gleichen Mittelpunkt auf, wenn der Kugelkopf in der Kugelpfanne liegt.

Vorzugsweise ist das Kugelgelenk derart ausgebildet, dass eine Bewegung zwischen dem Ankerelement und dem Befestigungselement in mindestens zwei oder genau zwei Freiheitsgraden erlaubt wird, wobei wenn die beiden Lagerabschnitte miteinander im Eingriff sind, eine translatorische Bewegung zwischen den beiden Lagerabschnitten verunmöglicht ist. Das heisst, dass das Befestigungselement für den Zweck der Ausrichtung im Wesentlichen um das Kugelgelenk verschwenkbar ist.

Vorzugsweise ist der ankerelementseitige Lagerabschnitt als Kugelpfanne bzw. als Segment einer Kugelpfanne ausgebildet und der befestigungselementseitige Lagerabschnitt ist als Kugelkopf bzw. als Segment eines Kugelkopfs ausgebildet.

Alternativerweise ist der befestigungselementseitige Lagerabschnitt als Kugelpfanne bzw. als Segment einer Kugelpfanne ausgebildet und der ankerelementseitige Lagerabschnitt ist als Kugelkopf bzw. als Segment eines Kugelkopfs ausgebildet.

Der Kugelkopf ist in der Kugelpfanne winklig verschwenkbar gelagert.

Vorzugsweise schliesst sich der Kugelpfanne in Richtung der Rückfläche ein Durchbruch an, der zur Rückfläche hin offen ausgebildet ist. Der Durchbruch weist eine lichte Weite auf, die grösser ist als der maximale Aussendurchmesser des Kugelkopfs. Weiter weist die Kugelpfanne gegenüberliegend zum Durchbruch eine Öffnung auf, durch welche der Befestigungsabschnitt aus der Kugelpfanne herausragt.

Somit kann das Befestigungselement von Seiten der Rückfläche her mit dem Ankerelement verbunden werden, wobei der Kugelkopf ebenfalls von Seiten der Rückfläche her in die Kugelpfanne geschoben wird. Hierdurch wird eine sehr einfache Montage erlaubt.

Vorzugsweise ist das Kugelgelenk derart ausgebildet, dass die Mittelachse des Befestigungselements ausgehend von einer Ausgangslage, bei welcher die Mittelachse des Befestigungselements rechtwinklig zur Rückfläche des Ankerelements steht, um einen zweiten Schwenkwinkel α von maximal 10°, insbesondere um einen Schwenkwinkel α von maximal 8°, zur Ausgangslage verschwenkbar ist.

Mit anderen Worten gesagt, wird der maximale Verschwenkbereich durch einen Kegel begrenzt, dessen Kegelspitze im Zentrum des Kugelgelenks liegt und dessen Öffnungswinkel maximal 20°, insbesondere maximal 16°, ist.

Vorzugsweise ist die Bewegung des Befestigungselements durch einen Seitenrand der Kugelpfanne und durch einen Schaftbereich am Befestigungselement, welcher am Seitenrand ansteht, begrenzt.

Erfindungsgemäss weist die Kugelpfanne einen Freischnitt auf, welcher derart angeordnet ist, dass ausgehend von der Ausgangslage, bei welcher die Mittelachse rechtwinklig zur Rückfläche steht, das Befestigungselement um einen Schwenkwinkel β von maximal 50°, insbesondere um einen Schwenkwinkel β von maximal 45°, verschwenkbar ist.

Durch diesen grossen Schwenkwinkel β lässt sich die Wandhalterung auch als Eckverbinder anordnen.

Erfindungsgemäss wird der Freischnitt durch einen Durchbruch in der Seitenwand der Kugelpfanne bereitgestellt.

Vorzugsweise ist die Kugelpfanne bei den Bereichen, welche sich dem Freischnitt um die Kugelpfanne herum ergänzen, wie folgt ausgebildet: Das Kugelgelenk ist in den Bereichen ohne dem Freischnitt derart ausgebildet, dass die Mittelachse des Befestigungselements ausgehend von einer Ausgangslage, bei welcher die Mittelachse rechtwinklig zur Rückfläche steht, um einen zweiten Schwenkwinkel α von maximal 10°, insbesondere um einen Schwenkwinkel α von maximal 8°, zur Ausgangslage verschwenkbar ist.

Vorzugsweise ist das Befestigungselement quer zur Bewegung um den genannten Schwenkwinkel β durch den Freischnitt um einen Querschwenkwinkel von maximal 10°, insbesondere um einen Querschwenkwinkel von maximal 8° verschwenkbar. Das heisst, zwischen dem Freischnitt und dem Befestigungselement ist entsprechendes Spiel vorhanden, so dass das Befestigungselement ausgehend von der oben genannten Ausgangslage nicht nur in den Freischnitt hinein verschwenkbar ist, sondern auch quer zum Freischnitt. Das heisst zwischen den Seitenwänden, die den Freischnitt seitlich begrenzen, und dem Schaftabschnitt des Befestigungselement ist Spiel vorhanden.

Vorzugsweise weist die Wandhalterung weiterhin ein Sicherungselement auf, mit welchem nach erfolgter Ausrichtung des Befestigungselements das ausgerichtete Befestigungselement zur Ankerplatte festlegbar bzw. festklemmbar ist.

Hierdurch kann das Befestigungselement zur Ankerplatte mechanisch fixiert werden, wodurch der Installateur die eingestellte Position fixieren kann und ohne weitere Manipulation ein Montagerahmen mit dem Befestigungselement verbinden kann.

Vorzugsweise ist das Sicherungselement am Befestigungselement gelagert und liegt vor der Frontfläche, wodurch verhindert wird, dass das Sicherungselement vor der Montage der Wandhalterung aus dem oben genannten Durchbruch nach hinten hin, aus der Kugelpfanne fallen kann.

Vorzugsweise ist das Sicherungselement als Sicherungsmutter mit einem Innengewinde ausgebildet. Die Sicherungsmutter ist mit dem Innengewinde auf einem Aussengewinde des Befestigungselements gelagert und bei einer Drehung gegen das Ankerelement bewegbar. Bei einer Bewegung der Sicherungsmutter gegen das Ankerelement wird der befestigungselementseitige Lagerabschnitt gegen den ankerelementseitigen Lagerabschnitt geklemmt. Durch diese Klemmung wird die das ausgerichtete Befestigungselement zur Ankerplatte festgelegt bzw. festgeklemmt.

Besonders bevorzugt ist zwischen dem Befestigungselement und dem Sicherungselement eine Raststruktur vorhanden.

Vorzugsweise verhindert die Raststruktur ein unkontrolliertes Drehen des Sicherungselements auf dem Befestigungselement. Zudem verhindert die Raststruktur ein unbeabsichtiges Lösen des Sicherungselements. Die Raststruktur kann durch mindestens ein am Sicherungselement angeordnete Rastnocke und durch entsprechende am Befestigungselement angeordnete Rastausnehmungen bereitgestellt werden.

Vorzugsweise ist das Sicherungselement und das Ankerelement über jeweilige kugelförmige Kontaktflächen miteinander in Kontakt bringbar sind. Hierdurch kann sichergestellt werden, dass die eingestellte Lage des Befestigungselements ganz genau gehalten werden kann.

In einer Weiterbildung oder einer bevorzugten Ausführungsform ist in der Kugelpfanne ein Sicherungsring eingelassen, welcher das Ankerelement und das Befestigungselement bezüglich einer Trennbewegung relativ zueinander sichern.

Vorzugsweise ist der Sicherungsring teilweise in die Oberfläche von Kugelpfanne oder Kugelkopf eingelassen.

Der Sicherungsring kann anstelle des Sicherungselements oder zusätzlich zum Sicherungselement eingesetzt werden.

Vorzugsweise ist der Sicherungsring als ein die Reibung zwischen dem ankerelementseitigen Lagerabschnitt und dem befestigungselementseitigen Lagerabschnitt erhöhendes Element ausgebildet.

Vorzugsweise ist der Befestigungsabschnitt des Befestigungselements ein Innengewinde, in welches eine Befestigungsschraube eindrehbar ist. Das Innengewinde kann integraler Bestandteil vom Befestigungselement sein, oder es kann Teil eines Gewindeelementes sein, dessen Gewindefunktion zur Grobeinstellung der Position zwischen Befestigungsschraube und Befestigungselement wegschaltbar und dessen Gewindefunktion zur Feineinstellung der Position zwischen Befestigungsschraube und Befestigungselement zuschaltbar ist.

Eine Anordnung umfasst mindestens eine Wandhalterung nach obiger Beschreibung und ein Sanitärelement mit einer Lageröffnung, in welche das Befestigungselement eingreift. Das Sanitärelement ist beispielsweise ein Montagerahmen, an welchem Sanitärartikel, wie Zufluss- und Abflussleitung, Spülkästen, Toilettenschüsseln, Urinale, Waschtische, etc. gelagert werden können. Weiter kann mindestens ein Sanitärartikel Teil der Anordnung sein.

Bei einem Verfahren zur Einstellung einer Wandhalterung wird zur Einstellung der Lage des Befestigungselements das Befestigungselement über das Kugelgelenk relativ zum Ankerelement verschwenkt. Bei vorhandenem Sicherungselement wird in einem nachfolgenden Schritt, das Befestigungselement zum Ankerelement festgelegt.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer Wandhalterung gemäss einer ersten Ausführungsform der vorliegenden Erfindung in einer Ausgangslage;
- Fig. 2: eine perspektivische Ansicht der Wandhalterung nach Figur 1 in einer verschwenkten Lage;
- Fig. 3: eine perspektivische Explosionsdarstellung von Teilen der Wandhalterung gemäss den Figuren 1 und 2;
- Fig. 4: eine Schnittdarstellung der Wandhalterung gemäss den vorhergehenden Figuren;
- Fig. 5: eine weitere Schnittansicht der Wandhalterung gemäss den vorhergehenden Figuren;
- Fig. 6: eine weitere Ansicht der Wandhalterung gemäss der vorhergehenden Figuren;
- Fig. 7: eine weitere Schnittdarstellung der Wandhalterung gemäss den vorhergehenden Figuren;
- Fig. 8: eine weitere perspektivische Ansicht der Wandhalterung gemäss den vorhergehenden Figuren;
- Fig. 9: eine perspektivische Ansicht einer Wandhalterung ohne Freischnitt in einer Ausgangslage;
- Fig. 10: eine Explosionsdarstellung der Wandhalterung gemäss Figur 9; und
- Fig. 11: eine Schnittdarstellung der Wandhalterung gemäss den Figuren 9 und 10.

### BESCHREIBUNG BEVORZUGTER AUSFÜHRUNGSFORMEN

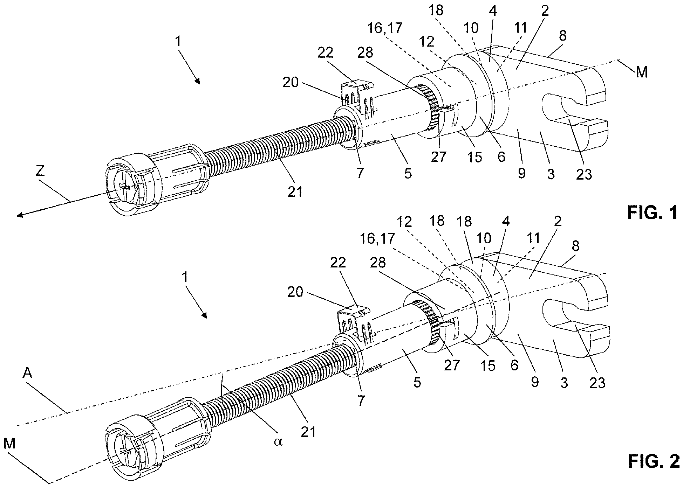

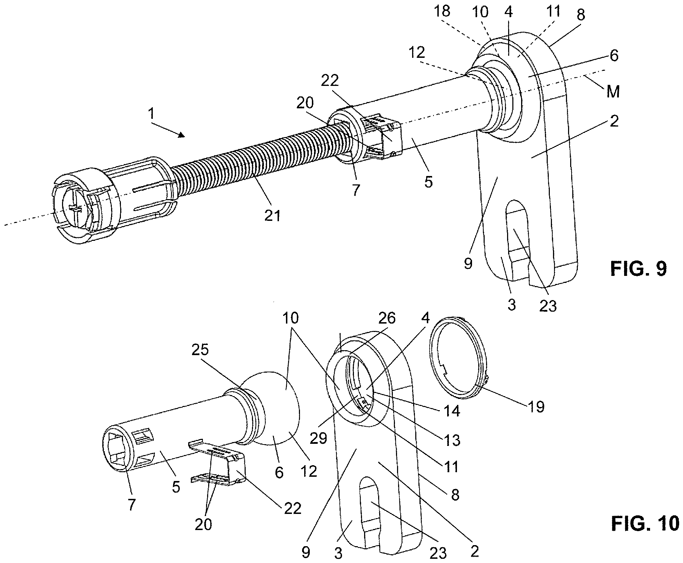

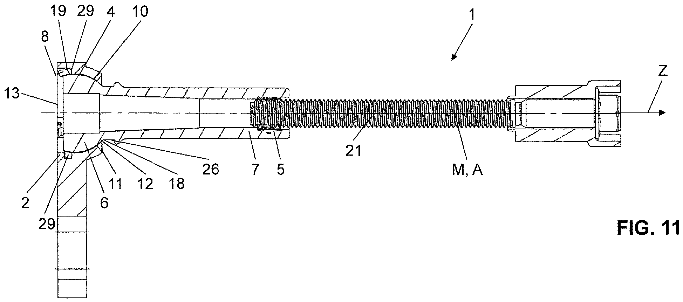

In den Figuren 1 bis 8 wird eine erste Ausführungsform einer erfindungsgemässen Wandhalterung 1 gezeigt. Die Figuren 9 bis 11 zeigen eine Wandhalterung ohne Freischnitt. Gleiche Teile tragen gleiche Bezugszeichen und es wird auf die jeweilige Beschreibung verwiesen.

Gemäss beiden Ausführungsformen umfasst die Wandhalterung 1 ein Ankerelement 2 und ein Befestigungselement 5. Die Wandhalterung 1 dient der Befestigung eines Sanitärelements, wie beispielsweise einem Montagerahmen. Am Sanitärelement sind Sanitärartikel gelagert.

Das Ankerelement 2 weist einen Befestigungsabschnitt 3 zur Befestigung des Ankerelementes 2 an einem Tragwerk, das in den Figuren nicht dargestellt ist, und einen ankerelementseitigen Lagerabschnitt 4 auf. Das Tragwerk kann eine Mauer oder ein ortsfest montiertes Profil sein.

Das Befestigungselement 5 erstreckt sich entlang einer Mittelachse M und weist rückseitig einen befestigungselementseitigen Lagerabschnitt 6 auf. Frontseitig weist das Befestigungselement 5 einen Befestigungsabschnitt 7 zur Befestigung eines Sanitärelements auf. In der gezeigten Ausführungsform steht der Befestigungsabschnitt 7 mit einer Befestigungsschraube 21 in Kontakt. Für diesen Kontakt weist der Befestigungsabschnitt des Befestigungselementes 5 ein Innengewinde 20 auf. In der gezeigten Ausführungsform ist das Innengewinde 20 Teil eines Gewindeelementes 22, welches von einer Grobeinstelllage in eine Feineinstelllage bewegbar ist. In der Grobeinstelllage ist das Innengewinde 20 nicht im Eingriff mit dem Gewinde der Befestigungsschraube 21, derart, dass die Befestigungsschraube 21 in translatorischer Bewegung entlang der Mittelachse M bewegbar ist. In der Feineinstelllage ist das Innengewinde 20 im Eingriff mit dem Gewinde der Befestigungsschraube 21, derart dass die Befestigungsschraube 21 durch Drehen derselben festgezogen werden kann.

Das Befestigungselement 5 und das Ankerelement 2 stehen über die jeweiligen Lagerabschnitte 4, 6 miteinander in Verbindung. Das Ankerelement 2 weist eine Rückfläche 8 auf, mit welcher das Ankerelement 2 auf dem Tragwerk auflegbar ist. Weiter weist das Ankerelement 2 eine Frontfläche 9 auf, von welcher das Befestigungselement 5 nach vorne hin absteht. Der Befestigungsabschnitt 3 des Ankerelementes 2 weist eine Öffnung 23 auf, durch welche ein Schraubenmittel hindurchgeführt werden kann, derart dass das Ankerelement 2 mit dem Tragwerk fest verbunden werden kann.

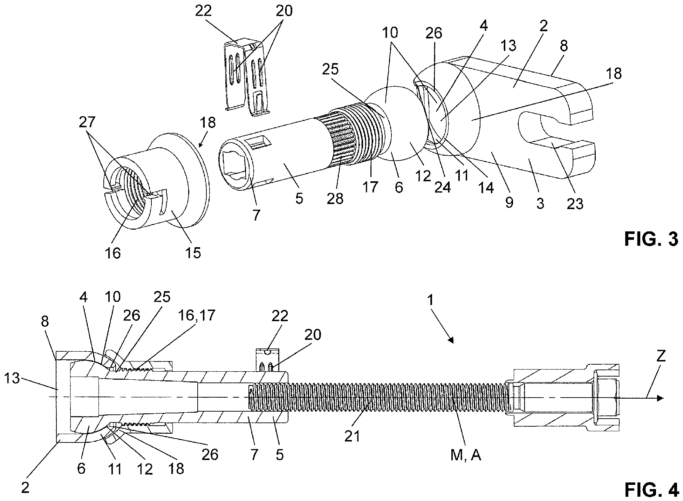

Wie anhand der Figuren 3 und 4 dann genauer erläutert wird, ist das Befestigungselement 5 zum Ankerelement 2 verschwenkbar ausgebildet. Durch diese verschwenkbare Ausbildung können Unebenheiten am Tragwerk entsprechend einfach ausgeglichen werden. Insbesondere kann die Lage des Befestigungselements 5 relativ zum Ankerelement 2 ausgerichtet werden. Mit anderen Worten kann die Lage der Mittelachse M entsprechend ausgerichtet werden.

In der Figur 1 wird eine Ausgangslage gezeigt. Bei der Ausgangslage steht die Mittelachse M des Befestigungselementes 5 im Wesentlichen rechtwinklig zur Rückfläche 8 des Ankerelementes 2. In der Figur 2 wird sodann eine verschwenkte Lage gezeigt. In der Figur 2 liegt das Befestigungselement 5 entsprechend verschwenkt zur Ausgangslage gemäss der Figur 1. Die Ausgangslage wird durch die Achse A symbolisiert. Die Mittelachse M des Befestigungselementes 5 liegt winklig geneigt zur Rückfläche 8 und in einem Schwenkwinkel α zur Achse A.

In der Figur 3 wird eine Explosionsdarstellung der Wandhalterung 1 ohne die Befestigungsschraube 21 gezeigt. In der Figur 4 wird eine entsprechende Schnittdarstellung gezeigt. Von den Figuren 3 und 4 wird ersichtlich, dass der ankerelementseitige Lagerabschnitt 4 und der befestigungselementseitige Lagerabschnitt 6 über ein Kugelgelenk 10 miteinander in Verbindung stehen. Das Kugelgelenk 10 umfasst dabei eine Kugelpfanne 11 und einen Kugelkopf 12. Sowohl Kugelpfanne als auch Kugelkopf sind jeweils als Teilsegmente von Kugeln ausgebildet. Dadurch, dass der ankerelementseitige Lagerabschnitt 4 und der befestigungselementseitige Lagerabschnitt 6 als Kugelgelenk 10 ausgebildet sind, ergeht der oben bereits beschriebene Vorteil, dass das Befestigungselement 5 entsprechend zum Ankerelement 2 verschwenkt werden kann.

In den gezeigten Ausführungsformen ist jeweils der ankerelementseitige Lagerabschnitt 4 als Kugelpfanne bzw. als Segment einer Kugelpfanne 11 ausgebildet. Der befestigungselementseitige Lagerabschnitt 6 ist entsprechend als Kugelkopf bzw. als Segment eines Kugelkopfes 12 ausgebildet. Alternativerweise wäre auch denkbar, dass die Anordnung umgekehrt ist.

Von den Schnittdarstellungen wird ersichtlich, dass sich der Kugelpfanne 11 in Richtung der Rückfläche 8 ein Durchbruch 13 anschliesst. Der Durchbruch 13 ist dabei zur Rückfläche 8 hin als offener Durchbruch ausgebildet. Der Durchbruch 13 weist eine lichte Weite auf, die grösser ist als der maximale Aussendurchmesser des Kugelkopfes 12. Weiter weist die Kugelpfanne 11 gegenüberliegend zum Durchbruch 13 eine Öffnung 14 auf, durch welche der Befestigungsabschnitt 7 aus der Kugelpfanne 11 herausragt. Das Befestigungselement 5 wird dabei mit dem Befestigungsabschnitt 7 voran in die Kugelpfanne 11 eingesetzt und wird durch die Öffnung 14 geführt. Bei weiterem Einschieben kommt dann der Kugelkopf 12 in die Kugelpfanne 11 zu liegen. In allen Ausführungsformen wird das Befestigungselement 5 somit von hinten her über die Rückfläche 8 in die Kugelpfanne 11 eingesetzt. Je nach Ausbildung der Kugelpfanne 11 wäre es auch denkbar, dass das Befestigungselement 5 von vorne her, das heisst über die Frontfläche 9, eingesetzt werden kann. Dies insbesondere bei Anwendungen, bei welchen die Zugkräfte auf das Befestigungselement 5 kleiner sind.

Die Kugelpfanne 11 und der Kugelkopf 12 sind derart ausgebildet, dass eine auf das Befestigungselement 5 wirkende Zugkraft Z durch die Kugelpfanne 11 aufgenommen wird. Die Zugkraft Z wirkt auf das Befestigungselement 5 entlang der Mittelachse M und vom Ankerelement 2 weg. Die Zugkraft ist in der Figur 4 eingezeichnet.

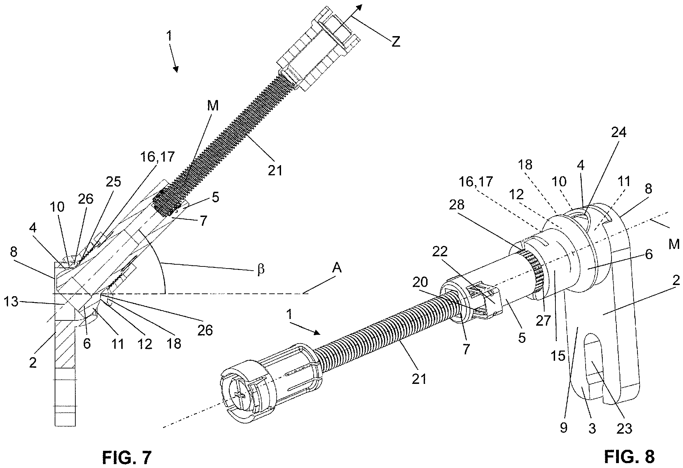

Erfindungsgemäß weist die Kugelpfanne einen Freischnitt 24 auf. Der Freischnitt 24 ist in den Figuren 3, 7 und 8 genauer ersichtlich. Der Freischnitt 24 ist derart angeordnet, dass ausgehend von der Ausgangslage, bei welcher die Mittelachse M des Befestigungselementes 5 rechtwinklig zur Rückfläche 8 steht, das Befestigungselement 5 um einen Schwenkwinkel β von maximal 50° verschwenkbar ist. Der Schwenkwinkel β ist in der Figur 7 entsprechend eingezeichnet. Durch den Freischnitt 24 wird es dem Befestigungselement 5 erlaubt, mit einem Schaftabschnitt 25 in den Freischnitt 24 bewegt zu werden. Der Freischnitt 24 erstreckt sich dabei durch eine Seitenwand, welche die Kugelpfanne 11 seitlich begrenzt. Der Schaftabschnitt 25 liegt in direktem Anschluss an den Kugelkopf 12. Durch den Freischnitt kann das Befestigungselement 5 um den Schwenkwinkel β verschwenkt werden, wodurch die Wandhalterung 1 auch als sogenannter Eckverbinder eingesetzt werden kann. Weiter weist der Freischnitt 24 eine Breite auf, welche grösser ist als der Schachtabschnitt 25, so dass das Befestigungselement 5 um einen Querschwenkwinkel, welcher quer zur Bewegung des genannten Schwenkwinkels β verläuft, verschwenkbar ist. Bezüglich der Figur 7 heisst dies, dass das Befestigungselement 5 nicht nur um den Schwenkwinkel β, sondern auch um den Querschwenkwinkel verschwenkbar ist. Der Querschwenkwinkel ergibt sich dabei ausgehend von der in Figur 7 gezeigten Lage zur Oberfläche des Zeichnungsblattes. Das heisst, das Befestigungselement 5 kann ausgehend von der Ebene des Zeichnungsblattes nach hinten oder nach vorne im Rahmen des Spiels zwischen dem Freischnitt 24 und dem Schaftabschnitt 25 bewegt werden. Vorzugsweise ist der Querschwenkwinkel maximal 8°, insbesondere maximal 10°. Hierdurch können ebenfalls entsprechende Unebenheiten ausgeglichen werden.

Das Kugelgelenk 10 ist derart ausgebildet, dass die Mittelachse M des Befestigungselementes 5 ausgehend von der Ausgangslage, bei welcher die Mittelachse M rechtwinklig zur Rückfläche 8 steht, um einen zweiten Schwenkwinkel α von maximal 10°. insbesondere von maximal 8°, zur Ausgangslage verschwenkbar ist. Diese Verschwenkbarkeit ist unabhängig von der Verschwenkbarkeit durch den Freischnitt 24 hindurch.

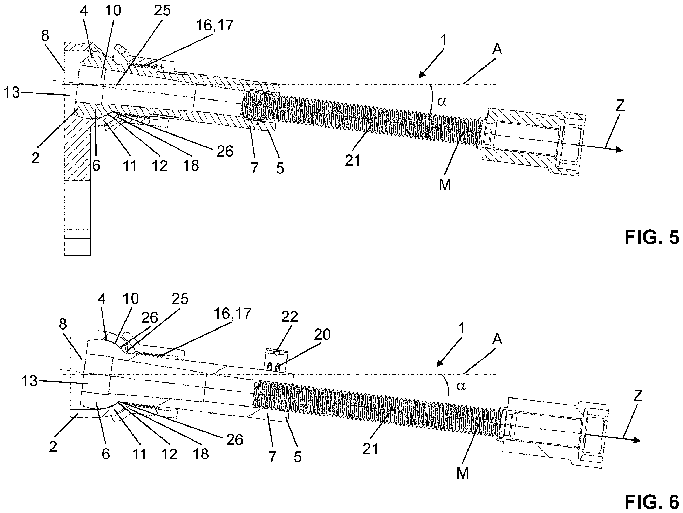

In der Figur 4 wird die Ausgangslage gezeigt. Hier kann gut erkannt werden, dass die Mittelachse M rechtwinklig zur Rückfläche 8 steht. In den Figur 5 wird eine erste verschwenkte Position des Befestigungselementes 5 gezeigt. Hier liegt das Befestigungselement 5 in einer Schwenklage, sodass die Mittelachse M in einem Schwenkwinkel α zur Rückfläche 8 liegt. In der Figur 6 wird eine weitere Schwenklage gezeigt. Diese weitere Schwenklage unterscheidet sich im Wesentlichen bezüglich der Richtung der Verschwenkung. In der Schwenklage gemäss Figur 5 wurde das Befestigungselement 5 zum Befestigungsabschnitt 3 des Ankerelementes 2 verschwenkt und in der Figur 6 wurde das Befestigungselement 5 quer dazu verschwenkt.

Die maximale Verschwenkbarkeit um den Schwenkwinkel α wird im Wesentlichen durch den Schaftabschnitt 25 und durch den Seitenrand 26 der Kugelpfanne 11 begrenzt. Der Schaftabschnitt 25 schlägt dabei am Seitenrand 26 entsprechend an.

Bezüglich des Schwenkwinkels α ist eine Verschwenkbarkeit innerhalb eines Kegels, dessen Kegelspitze im Zentrum des Kugelgelenkes 10 liegt und dessen Kegelmittelachse parallel zur Mittelachse M des Befestigungselementes 5 in der Ausgangslage möglich. Der Kegel weist dabei einen Öffnungswinkel auf, welcher dem Doppelten des maximalen Verschwenkwinkels α entspricht. Das heisst, der Öffnungswinkel des Kegels ist maximal 20°, insbesondere maximal 16°.

In den gezeigten Ausführungsformen weist die Wandhalterung 1 weiterhin ein Sicherungselement 15 auf. Das Sicherungselement 15 wird in den Figuren 1 bis 6 entsprechend dargestellt. Das Sicherungselement 15 dient dazu, dass nach erfolgter Ausrichtung des Befestigungselementes 5 das ausgerichtete Befestigungselement 5 zur Ankerplatte 2 fixierbar ist. In der gezeigten Ausführungsform ist das Sicherungselement 15 als Sicherungsmutter mit einem Innengewinde 16 ausgebildet. Die Sicherungsmutter ist mit dem Innengewinde 16 auf einem Aussengewinde 17 des Befestigungselementes 5 gelagert. Die Sicherungsmutter ist gegen das Ankerelement 2 bewegbar. Bei einer Bewegung gegen das Ankerelement 2 wird der befestigungselementseitige Lagerabschnitt 6 gegen den ankerelementseitigen Lagerabschnitt 4 entsprechend geklemmt. Das heisst, es kommt zu einer Verklemmung zwischen der Kugelpfanne 11 und dem Kugelkopf 12.

In der gezeigten Ausführungsform ist zwischen dem Befestigungselement 5 und dem Sicherungselement 15 eine Raststruktur vorhanden. Die Raststruktur umfasst dabei zwei gegenüberliegend einander angeordnete Rastnocken 27, welche am Sicherungselement 15 angeformt sind, sowie am Befestigungselement 5 vorgesehene Rastausnehmungen 28. Die Rastnocken 27 greifen dabei in die Rastausnehmungen 28 ein. Bei der Bewegung des Sicherungselementes 15 ist die Eingriffskraft zwischen Rastnocke 27 und Rastausnehmung 28 zu überwinden. Die Raststruktur hat den Vorteil, dass ein unbeabsichtigtes Lösen des Sicherungselementes 15 vermieden werden kann.

In der gezeigten Ausführungsform steht das Sicherungselement 15 und das Ankerelement 2 über jeweilige kugelförmige Kontaktflächen 18 miteinander in Kontakt. Diese kugelförmigen Kontaktflächen 18 sorgen dafür, dass bei jeder Ausrichtung des Befestigungselementes 5 eine entsprechende Fixierung erlaubt wird, ohne negative Beeinflussung der ausgerichteten Lage des Befestigungselementes 5. Die kugelförmige Kontaktfläche 18 auf Seiten des Ankerelemente 2 umgibt dabei die Kugelpfanne 11 aussenseitig. Das Zentrum der kugelförmigen Kontaktflächen 18 und der Kugelpfanne 11 beziehungsweise des Kugelkopfes 12 ist dabei identisch.

In den Figuren 9 bis 11 ist in der Kugelpfanne 11 ein Sicherungsring 19 eingelassen. Der Sicherungsring 19 liegt dabei in einer umlaufenden Nut 29, welche sich der Kugelpfanne 11 anschliesst beziehungsweise Teil der Kugelpfanne 11 sein kann. Mit dem Sicherungsring 19 wird verhindert, dass das Befestigungselement 5 nach hinten hin, also über den Durchbruch 13, aus der Kugelpfanne herausfallen kann. Das Sicherungselement 19 ist vorzugsweise ein Ring aus Kunststoff, welcher in der Nut eingepresst werden kann. Der Sicherungsring 19 kann auch als Element vorgesehen sein, welches die Reibung zwischen dem ankerelementseitigen Lagerabschnitt 4 und dem befestigungselementseitigen Lagerabschnitt 6 entsprechend erhöht. Hierdurch wird eine Art Vorfixierung für den Installateur geschaffen.

In weiteren bevorzugten Ausführungsformen ist es zudem denkbar, dass der Sicherungsring 19 auch an der Ausführungsform gemäss den Figuren 1 bis 8 eingesetzt werden kann. Dies im Wesentlichen mit dem Zweck, eine Struktur zu schaffen, bei welchem bei der Ausrichtung des Befestigungselements ein geringer Widerstand spürbar ist.

### BEZUGSZEICHENLISTE

| | | | |
|---|---|---|---|
| 1 | Wandhalterung | 28 | Rastausnehmungen |
| 2 | Ankerelement | 29 | Nut |
| 3 | Befestigungsabschnitt | | |
| 4 | ankerelementseitiger Lagerabschnitt | A | Achse |
| | | M | Mittelachse |
| 5 | Befestigungselement | Z | Zugkraft |
| 6 | befestigungselementseitiger Lagerabschnitt | α | Schwenkwinkel |
| | | β | Schwenkwinkel |
| 7 | Befestigungsabschnitt | | |
| 8 | Rückfläche | | |
| 9 | Frontfläche | | |
| 10 | Kugelgelenk | | |
| 11 | Kugelpfanne | | |
| 12 | Kugelkopf | | |
| 13 | Durchbruch | | |
| 14 | Öffnung | | |
| 15 | Sicherungselement | | |
| 16 | Innengewinde | | |
| 17 | Aussengewinde | | |
| 18 | kugelförmige Kontaktflächen | | |
| 19 | Sicherungsring | | |
| 20 | Innengewinde | | |
| 21 | Befestigungsschraube | | |
| 22 | Gewindeelement | | |
| 23 | Öffnung | | |
| 24 | Freischnitt | | |
| 25 | Schaftabschnitt | | |
| 26 | Seitenrand | | |
| 27 | Rastnocken | | |

## Patentansprüche

1. Wandhalterung (1) umfassend
ein Ankerelement (2) mit einem Befestigungsabschnitt (3) zur Befestigung des Ankerelements (2) an einem Tragwerk und mit einem ankerelementseitigen Lagerabschnitt (4), und
ein sich entlang einer Mittelachse (M) erstreckendes Befestigungselement (5) mit einem befestigungselementseitigen Lagerabschnitt (6) und mit einem Befestigungsabschnitt (7) zur Befestigung eines Sanitärelements,
wobei das Befestigungselement (5) und das Ankerelement (2) über die jeweiligen Lagerabschnitte (4, 6) miteinander in Verbindung stehen, und
wobei das Ankerelement (2) eine Rückfläche (8), mit welcher das Ankerelement (2) auf dem Tragwerk auflegbar ist, und eine Frontfläche (9), von welcher das Befestigungselement (5) absteht, aufweist,
wobei der ankerelementseitige Lagerabschnitt (4) und der befestigungselementseitige Lagerabschnitt (6) ein Kugelgelenk (10) mit einer Kugelpfanne (11) und einem Kugelkopf (12) bilden, **dadurch gekennzeichnet, dass** die Kugelpfanne (11) einen durch einen Durchbruch in einer Seitenwand der Kugelpfanne (11) bereitgestellten Freischnitt (24) aufweist, welcher derart angeordnet ist, dass ausgehend von der Ausgangslage, bei welcher die Mittelachse (M) rechtwinklig zur Rückfläche (8) steht, das Befestigungselement (5) durch den Freischnitt (24) um einen Schwenkwinkel (β) von maximal 50° verschwenkbar ist.

2. Wandhalterung (1) nach Anspruch 1, **dadurch gekennzeichnet, dass** der ankerelementseitige Lagerabschnitt (4) als Kugelpfanne bzw. als Segment einer Kugelpfanne (11) ausgebildet ist und dass der befestigungselementseitige Lagerabschnitt (6) als Kugelkopf bzw. als Segment eines Kugelkopfs (12) ausgebildet ist; oder dass der befestigungselementseitige Lagerabschnitt (6) als Kugelpfanne bzw. als Segment einer Kugelpfanne (11) ausgebildet ist und dass der ankerelementseitige Lagerabschnitt (4) als Kugelkopf bzw. als Segment eines Kugelkopfs (12) ausgebildet ist.

3. Wandhalterung (1) nach Anspruch 1 oder 2, **dadurch gekennzeichnet, dass** sich der Kugelpfanne (11) in Richtung der Rückfläche (8) ein weiterer Durchbruch (13) anschliesst der zur Rückfläche (8) hin offen ausgebildet ist, wobei der Durchbruch (13) eine lichte Weite aufweist, die grösser ist als der maximale Aussendurchmesser des Kugelkopfs (12) und dass die Kugelpfanne (11) gegenüberliegend zum Durchbruch (13) eine Öffnung (14) aufweist, durch welche der Befestigungsabschnitt (7) aus der Kugelpfanne (11) herausragt.

4. Wandhalterung (1) nach einem der vorhergehenden Ansprüche, **dadurch gekennzeichnet, dass** das Kugelgelenk (10) derart ausgebildet ist, dass die Mittelachse (M) des Befestigungselements (5) ausgehend von einer Ausgangslage, bei welcher die Mittelachse (M) rechtwinklig zur Rückfläche (8) steht, um einen zweiten Schwenkwinkel (α) von maximal 10°, insbesondere um einen Schwenkwinkel (α) von maximal 8°, zur Ausgangslage verschwenkbar ist.

5. Wandhalterung (1) nach einem der vorhergehenden Ansprüche, **dadurch gekennzeichnet, dass** das Befestigungselement (5) quer zur Bewegung um den genannten Schwenkwinkel (β) um einen Querschwenkwinkel von maximal 10°, insbesondere um einen Querschwenkwinkel von maximal 8° verschwenkbar ist.

6. Wandhalterung (1) nach einem der vorhergehenden Ansprüche, **dadurch gekennzeichnet, dass** die Wandhalterung (1) weiterhin ein Sicherungselement (15) aufweist, mit welchem nach erfolgter Ausrichtung des Befestigungselements (5) das ausgerichtete Befestigungselement (5) zur Ankerplatte (2) festlegbar bzw. festklemmbar ist.

7. Wandhalterung (1) nach Anspruch 6, **dadurch gekennzeichnet, dass** das Sicherungselement (15) als Sicherungsmutter mit einem Innengewinde (16) ausgebildet ist, wobei die Sicherungsmutter mit dem Innengewinde auf einem Aussengewinde (17) des Befestigungselements (5) gelagert ist und gegen das Ankerelement (2) bewegbar ist, wobei bei einer Bewegung gegen das Ankerelement (2) der befestigungselementseitige Lagerabschnitt (6) gegen den ankerelementseitigen Lagerabschnitt (4) geklemmt wird.

8. Wandhalterung (1) nach Anspruch 6 oder 7, **dadurch gekennzeichnet, dass** zwischen dem Befestigungselement (5) und dem Sicherungselement (15) eine Raststruktur (27, 28) vorhanden ist.

9. Wandhalterung (1) nach einem der Ansprüche 6 bis 8, **dadurch gekennzeichnet, dass** das Sicherungselement (15) und das Ankerelement (2) über jeweilige kugelförmige Kontaktflächen (18) miteinander in Kontakt bringbar sind.

10. Wandhalterung (1) nach einem der vorhergehenden Ansprüche, **dadurch gekennzeichnet, dass** in der Kugelpfanne (11) ein Sicherungsring (19) eingelassen ist, welcher das Ankerelement (2) und das Befestigungselement (5) bezüglich einer Trennbewegung relativ zueinander sichern.

11. Wandhalterung (1) nach Anspruch 10, **dadurch gekennzeichnet, dass** der Sicherungsring (19) als ein die Reibung zwischen dem ankerelementseitigen Lagerabschnitt (4) und dem befestigungselementseitigen Lagerabschnitt (6) erhöhendes Element ausgebildet ist.

12. Wandhalterung (1) nach einem der vorhergehenden Ansprüche, **dadurch gekennzeichnet, dass** der Befestigungsabschnitt des Befestigungselementes (5) ein Innengewinde (20) ist, in welches eine Befestigungsschraube (21) eindrehbar ist.

13. Anordnung umfassend mindestens eine Wandhalterung (1) nach einem der vorhergehenden Ansprüche und ein Sanitärelement mit einer Lageröffnung, welche mit dem Befestigungselement (5) verbindbar ist.

14. Verfahren zur Einstellung einer Wandhalterung nach einem der vorhergehenden Ansprüche 1 bis 12, **dadurch gekennzeichnet, dass** zur Einstellung der Lage des Befestigungselements (5) das Befestigungselement (5) über das Kugelgelenk (10) relativ zum Ankerelement verschwenkt wird.

## Claims

1. Wall bracket (1) comprising
an anchor element (2) with a fastening section (3) for fastening the anchor element (2) to a supporting structure and with a bearing section (4) on the anchor element side, and
a fastening element (5) extending along a central axis (M) with a bearing section (6) on the fastening element side and with a fastening section (7) for fastening a sanitary element,
wherein the fastening element (5) and the anchor element (2) are connected to each other via the respective bearing sections (4, 6), and
wherein the anchor element (2) has a rear surface (8) with which the anchor element (2) can be placed on the supporting structure, and a front surface (9) from which the fastening element (5) protrudes,
wherein the bearing section (4) on the anchor element side and the bearing section (6) on the fastening element side form a ball joint (10) with a ball socket (11) and a ball head (12), **characterised in that** the ball socket (11) has a free cut (24) provided by a breakthrough in a side wall of the ball socket (11), which is arranged in such a way that, starting from the initial position in which the central axis (M) is perpendicular to the rear surface (8), the fastening element (5) can be pivoted through the free cut (24) by a pivot angle (β) of at most 50°.

2. Wall bracket (1) according to claim 1, **characterised in that** the bearing section (4) on the anchor element side is designed as a ball socket or as a segment of a ball socket (11) and **in that** the bearing section (6) on the fastening element side is designed as a ball head or as a segment of a ball head (12); or **in that** the bearing section (6) on the fastening element side is designed as a ball socket or as a segment of a ball socket (11) and **in that** the bearing section (4) on the anchor element side is designed as a ball head or as a segment of a ball head (12).

3. Wall bracket (1) according to claim 1 or 2, **characterised in that** the ball socket (11) is connected in the direction of the rear surface (8) by a further free cut (13) , which is open towards the rear surface (8), wherein the opening (13) has a clear width that is greater than the maximum outer diameter of the ball head (12) and that the ball socket (11) has an opening (14) opposite the free cut (13), through which the fastening section (7) protrudes from the ball socket (11).

4. Wall bracket (1) according to one of the preceding claims, **characterised in that** the ball joint (10) is designed such that the central axis (M) of the fastening element (5) can be pivoted relative to the initial position, in which the central axis (M) is at right angles to the rear surface (8), by a maximum pivot angle (α) of 10°, in particular by a second pivot angle (α) of a maximum of 8°.

5. Wall bracket (1) according to one of the preceding claims, **characterised in that** the fastening element (5) can be pivoted transversely to the movement by the said pivot angle (β) by a transverse pivot angle of at most 10°, in particular by a transverse pivot angle of at most 8°.

6. Wall bracket (1) according to one of the preceding claims, **characterised in that** the wall bracket (1) further comprises a securing element (15) with which, after the fastening element (5) has been aligned, the aligned fastening element (5) can be fixed or clamped to the anchor element (2).

7. Wall bracket (1) according to claim 6, **characterised in that** the securing element (15) is designed as a lock nut with an internal thread (16), wherein the lock nut with the internal thread is mounted on an external thread (17) of the fastening element (5) and can be moved against the anchor element (2), whereby, when moved against the anchor element (2), the bearing section (6) on the fastening element side is clamped against the bearing section (4) on the anchor element side.

8. Wall bracket (1) according to claim 6 or 7, **characterised in that** a locking structure (27, 28) is provided between the fastening element (5) and the securing element (15).

9. Wall bracket (1) according to one of claims 6 to 8, **characterised in that** the securing element (15) and the anchoring element (2) can be brought into contact with each other via respective spherical contact surfaces (18).

10. Wall bracket (1) according to one of the preceding claims, **characterised in that** a retaining ring (19) is embedded in the ball socket (11), which secures the anchor element (2) and the fastening element (5) relative to each other with respect to a separating movement.

11. Wall bracket (1) according to claim 10, **characterised in that** the retaining ring (19) is designed as an element that increases the friction between the bearing section (4) on the anchor element side and the bearing section (6) on the fastening element side.

12. Wall bracket (1) according to one of the preceding claims, **characterised in that** the fastening section of the fastening element (5) is an internal thread (20) into which a fastening screw (21) can be screwed.

13. Arrangement comprising at least one wall bracket (1) according to one of the preceding claims and a sanitary element with a bearing opening which can be connected to the fastening element (5).

14. Method for adjusting a wall bracket according to one of the preceding claims 1 to 12, **characterised in that**, in order to adjust the position of the fastening element (5), the fastening element (5) is pivoted relative to the anchor element via the ball joint (10).

## Revendications

1. Support mural (1) comprenant
un élément d'ancrage (2) avec une partie de fixation (3) pour fixer l'élément d'ancrage (2) à une structure porteuse et avec une partie d'appui (4) côté élément d'ancrage, et
un élément de fixation (5) s'étendant le long d'un axe central (M) avec une partie d'appui (6) côté élément de fixation et avec une partie de fixation (7) pour la fixation d'un élément sanitaire,
l'élément de fixation (5) et l'élément d'ancrage (2) étant reliés entre eux par l'intermédiaire des parties d'appui respectives (4, 6), et
l'élément d'ancrage (2) présentant une surface arrière (8) avec laquelle l'élément d'ancrage (2) peut être posé sur la structure porteuse, et une surface avant (9) à partir de laquelle l'élément de fixation (5) fait saillie,
la partie d'appui (4) côté élément d'ancrage et la partie d'appui (6) côté élément de fixation formant une articulation à rotule (10) avec une cuvette sphérique (11) et une tête sphérique (12), **caractérisé en ce que** la cuvette sphérique (11) présente une découpe (24) réalisée par une percée à travers une paroi latérale de la cuvette sphérique (11), qui est disposée de telle sorte que, à partir de la position initiale dans laquelle l'axe central (M) est perpendiculaire à la surface arrière (8), l'élément de fixation (5) peut pivoter d'un angle de pivotement (β) maximal de 50° grâce à la découpe (24).

2. Support mural (1) selon la revendication 1, **caractérisé en ce que** la partie d'appui (4) côté élément d'ancrage est conçue comme une cuvette sphérique ou comme un segment d'une cuvette sphérique (11) et **en ce que** la partie d'appui (6) côté élément de fixation est conçue comme une tête sphérique ou comme un segment d'une tête sphérique (12) ; ou **en ce que** la partie d'appui (6) côté élément de fixation est conçue comme une cuvette sphérique ou comme un segment d'une cuvette sphérique (11) et **en ce que** la partie d'appui (4) côté élément d'ancrage est conçue comme une tête sphérique ou comme un segment d'une tête sphérique (12).

3. Support mural (1) selon la revendication 1 ou 2, **caractérisé en ce qu'**une autre percée (13) étant ouverte vers la surface arrière (8) se raccorde à la cuvette sphérique (11) en direction de la surface arrière (8), l'ouverture (13) présentant une largeur intérieure supérieure au diamètre extérieur maximal de la tête sphérique (12) et **en ce que** la cuvette sphérique (11) présente, à l'opposé de la percée (13), une ouverture (14) à travers laquelle la partie de fixation (7) dépasse de la cuvette sphérique (11).

4. Support mural (1) selon l'une des revendications précédentes, **caractérisé en ce que** l'articulation à rotule (10) est conçue de telle sorte que l'axe central (M) de l'élément de fixation (5) puisse pivoter par rapport à une position initiale dans laquelle l'axe central (M) est perpendiculaire à la surface arrière (8) d'un deuxième angle de pivotement (α) maximal de 10°, en particulier d'un angle de pivotement (α) maximal de 8°.

5. Support mural (1) selon l'une quelconque des revendications précédentes, **caractérisé en ce que** l'élément de fixation (5) peut pivoter transversalement au mouvement autour dudit angle de pivotement (β) d'un angle de pivotement transversal maximal de 10°, en particulier d'un angle de pivotement transversal maximal de 8°.

6. Support mural (1) selon l'une quelconque des revendications précédentes, **caractérisé en ce que** le support mural (1) comporte en outre un élément de sécurisation (15) permettant, une fois l'élément de fixation (5) aligné, de fixer ou de bloquer l'élément de fixation (5) aligné par rapport à la plaque d'ancrage (2).

7. Support mural (1) selon la revendication 6, **caractérisé en ce que** l'élément de sécurisation (15) est conçu comme un écrou de sécurisation avec un filetage intérieur (16), l'écrou de sécurisation avec le filetage intérieur étant monté sur un filetage extérieur (17) de l'élément de fixation (5) et peut être déplacé contre l'élément d'ancrage (2), la partie d'appui (6) côté élément de fixation étant serrée contre la partie d'appui (4) côté élément d'ancrage lors d'un mouvement contre l'élément d'ancrage (2).

8. Support mural (1) selon la revendication 6 ou 7, **caractérisé en ce qu'**une structure d'encliquetage (27, 28) est prévue entre l'élément de fixation (5) et l'élément de sécurisation (15).

9. Support mural (1) selon l'une des revendications 6 à 8, **caractérisé en ce que** l'élément de sécurisation (15) et l'élément d'ancrage (2) peuvent être mis en contact l'un avec l'autre par l'intermédiaire de surfaces de contact sphériques respectives (18).

10. Support mural (1) selon l'une quelconque des revendications précédentes, **caractérisé en ce qu'**un anneau de sécurisation (19) est encastré dans la cuvette sphérique (11), une bague de sécurisation bloquant l'élément d'ancrage (2) et l'élément de fixation (5) l'un par rapport à l'autre en cas de mouvement de séparation.

11. Support mural (1) selon la revendication 10, **caractérisé en ce que** la bague de sécurisation (19) est conçue comme un élément augmentant le frottement entre la partie d'appui (4) côté élément d'ancrage et la partie d'appui (6) côté élément de fixation.

12. Support mural (1) selon l'une quelconque des revendications précédentes, **caractérisé en ce que** la partie de fixation de l'élément de fixation (5) est un filetage intérieur (20) dans lequel une vis de fixation (21) peut être vissée.

13. Dispositif comprenant au moins un support mural (1) selon l'une quelconque des revendications précédentes et un élément sanitaire avec une ouverture d'appui qui peut être reliée à l'élément de fixation (5).

14. Procédé de réglage d'un support mural selon l'une des revendications 1 à 12 précédentes, **caractérisé en ce que**, pour régler la position de l'élément de fixation (5), l'élément de fixation (5) est pivoté par rapport à l'élément d'ancrage via l'articulation à rotule (10).
